# EUROPÄISCHE PATENTSCHRIFT

(11) **EP 3 994 040 B1**
(45) Veröffentlichungstag und Bekanntmachung des Hinweises auf die Patenterteilung: **31.08.2022**
(21) Anmeldenummer: 21715202.4
(22) Anmeldetag: 23.03.2021
(51) Int. Cl.: B60W 30/08, G01C 21/32, G05D 1/00, G06K 9/00, G08G 1/01, G08G 1/0967, G08G 1/16

(54) **VERFAHREN ZUM KOORDINIEREN VON VERKEHRSTEILNEHMERN DURCH EINE SERVERVORRICHTUNG SOWIE EINE SERVERVORRICHTUNG UND EINE STEUERSCHALTUNG ZUM DURCHFÜHREN DES VERFAHRENS**
METHOD FOR COORDINATING ROAD USERS VIA A SERVER DEVICE, AND SERVER DEVICE AND A CONTROL CIRCUIT FOR CARRYING OUT THE METHOD
PROCÉDÉ DE COORDINATION D'USAGERS DE LA ROUTE PAR L'INTERMÉDIAIRE D'UN DISPOSITIF SERVEUR, DISPOSITIF SERVEUR ET CIRCUIT DE COMMANDE POUR LA MISE EN OEUVRE DUDIT PROCÉDÉ

(30) Priorität: 09.06.2020 DE 102020115233
(43) Veröffentlichungstag der Anmeldung: 11.05.2022
(73) Patentinhaber: Audi AG, 85045 Ingolstadt (DE)
(72) Erfinder: FREISCHEM, Karsten, 85110 Kipfenberg (DE)
(86) Internationale Anmeldenummer: PCT/EP2021/057360
(87) Internationale Veröffentlichungsnummer: WO 2021/249677

(56) Entgegenhaltungen:
- DE-A1-102009 008 745
- DE-A1-102017 202 065
- DE-A1-102017 203 662
- DE-B4-102009 008 745
- DE-B4-102017 203 662

## Beschreibung

Die Erfindung betrifft ein Verfahren zum Koordinieren von Verkehrsteilnehmern durch eine Servervorrichtung sowie eine Servervorrichtung und eine Steuerschaltung zum Durchführen des Verfahrens.

Für ein automatisiertes Fahren eines Kraftfahrzeugs im Level 3 oder 4 oder autonomes Fahren im Level 5 (Levelangaben gemäß der Norm SAE J3016) sind detaillierte Umfeld- und Fahrzeugzustandsdaten essentiell. Diese Umfelddaten umfassen z.B. Straßeninformationen, geografischen Informationen, Angaben zu Gebäuden / Bauten, Verkehrsleitsystemen (insbesondere Verkehrszeichen, Ampelanlagen), Wetterdaten, Verkehrsinformationen zu Verkehrsdichte und Verkehrsfluss, Geopositionen weiterer Verkehrsteilnehmer, wie z.B. Fußgängern und Radfahrern. Diese Umfelddaten werden zum großen Teil über verschiedenste Technologien der Fahrzeugsensorik erfasst und optional angereichert durch Informationen von Datenanbietern. In den heutigen Ansätzen der Umfelderfassung und -bewertung ist das Ziel, die Berechnungen in nahezu Echtzeit im Fahrzeug durchzuführen.

Diese Berechnung erfordert aber hohe Rechenkapazitäten im Fahrzeug, entsprechend hohe Strombedarfe (z.B. für Prozessoren, Klimatisierung) und große Datenmengen, die ins Fahrzeug gesendet oder aus dem Fahrzeug empfangen werden müssen. Eine Echtzeitfähigkeit ist daher technologisch aufwändig. Die Instandsetzung (z.B. Kalibrierung) oder auch die Wartbarkeit des einzelnen Fahrzeugs ist nur mit hohem Aufwand leistbar und damit einhergehend mit hohen Kosten verbunden. Eine auch nur teilweise Befähigung des heutigen Fahrzeugbestandes durch z.B. Nachrüstung ist daher praktisch nicht möglich.

Aus der DE 10 2009 008 745 A1 sind ein Verfahren und ein System zur automatischen Verkehrsführung bekannt. Das System weist eine zentrale Steuereinheit auf, die zur Berechnung eines Umfeldmodells aus Umfelddaten mehrerer Fahrzeuge dient, wobei aus dem Umfeldmodell Verkehrsführungsdaten ermittelt und an die Fahrzeuge übertragen werden.

Aus der DE 10 2013 223 217 A1 ist ein Verfahren zum Betreiben eines Servers bekannt. Der Server dient zur Bildung aggregierter Umfelddaten aus einzelnen Umfelddaten mehrerer Fahrzeuge, wobei eine Abweichung der aggregierten Umfelddaten von den einzelnen Umfelddaten bestimmt wird. Aus der DE 10 2014 220 687 A1 sind eine Kommunikationsvorrichtung für ein Fahrzeug und ein Verfahren zum Kommunizieren bekannt. Das Fahrzeug weist eine Sensoreinrichtung auf, die zur Erfassung von Sensordaten dient, wobei das Fahrzeug Referenzdaten einer externen Verwaltungseinrichtung empfängt und eine Abweichung der Referenzdaten von den Sensordaten ermittelt und die Abweichung an die zentrale Verwaltungseinrichtung übertragen wird.

Aus der DE 10 2017 202065 A1 ist ein Verfahren zum Koordinieren eines Verkehrs mehrerer Kraftfahrzeuge innerhalb eines vorbestimmten Infrastrukturbereichs bekannt.

Nachteilig am genannten Stand der Technik ist, dass sensorische Abweichungen einer Verkehrssituation nicht erfasst werden.

Der Erfindung liegt die Aufgabe zugrunde, ein Verfahren zum Koordinieren von Verkehrsteilnehmern bereitzustellen, bei dem Maßnahmen aufgrund sensorischer Abweichungen des Verkehrsteilnehmers nachjustiert werden. Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Koordinieren von Verkehrsteilnehmern durch eine Servervorrichtung bereitgestellt, wobei die Servervorrichtung wiederholt aus Umgebungsdaten einer Umgebung ein digitales Zentralmodell der Umgebung erstellt und mittels des Zentralmodells für zumindest einen der Verkehrsteilnehmer jeweilige Anweisungsdaten für eine Handlungsanweisung berechnet, wobei die jeweilige Handlungsanweisung eine von dem jeweiligen Verkehrsteilnehmer in der Umgebung auszuführende Handlung vorgibt, und die jeweilige Handlungsanweisung an den jeweiligen Verkehrsteilnehmer aussendet.

Das Verfahren ist dadurch gekennzeichnet, dass die Servervorrichtung wiederholt zumindest einigen der Verkehrsteilnehmer das Zentralmodell für einen Vergleich mit der Umgebung bereitstellt und aus zumindest einem oder einigen der Verkehrsteilnehmer Delta-Daten, welche einen durch den Verkehrsteilnehmern erfassten Unterschied zwischen der Umgebung und dem Zentralmodell beschreibt, empfängt und das Zentralmodell auf der Grundlage der Delta-Daten aktualisiert und mittels des aktualisierten Zentralmodells überprüft, ob die Anweisungsdaten gemäß einem vorbestimmten Korrekturkriterium korrekturbedürftig sind, und bei Erkennen von korrekturbedürftigen Anweisungsdaten diese durch Anpassen der Anweisungsdaten für die Handlungsanweisung an das aktualisierte Zentralmodell aktualisiert werden und die aktualisierten Anweisungsdaten an den jeweiligen Verkehrsteilnehmer, für welchen die jeweilige Handlungsanweisung bestimmt ist, ausgesendet werden.

Mit anderen Worten, das Berechnen von Anweisungsdaten, die beispielsweise das Durchführen eines Lenk- oder Bremsmanövers beschreiben, kann von dem Verkehrsteilnehmer selbst auf eine Servervorrichtung ausgelagert werden. Der Verkehrsteilnehmer kann beispielsweise ein Kraftfahrzeug mit einer Steuerschaltung, ein Fußgänger oder ein Radfahrer mit jeweils einem Benutzergerät mit der Steuerschaltung sein. Damit werden die Verkehrsteilnehmer durch die Servervorrichtung koordiniert. Die Servervorrichtung kann dafür ein Zentralmodell der Umgebung des Verkehrsteilnehmers bereitstellen, das mit Daten aus mehreren Quellen erzeugt t wird. Beispielsweise können dies Daten einer Straßenkarte, Daten von Verkehrsteilnehmern, Daten von Gebäuden, Straßeninformationen, geographische Informationen, Daten eines Verkehrsleitsystems (z.B. Verkehrszeichen, Ampelanlagen), Wetterdaten oder Verkehrsdichte und -fluss sein. Dabei können die Daten von Verkehrsteilnehmern Sensordaten eines vorausgefahrenen Fahrzeugs und/oder Positionsdaten eines Fußgängers oder Radfahrers, welche beispielsweise von einem mobilen Endgerät bereitgestellt werden, umfassen. Aus den aufgezählten Daten wird das Zentralmodell gepflegt.

Der besagte Verkehrsteilnehmer, dem das Zentralmodell von der Servervorrichtung bereitgestellt wird, kann ein Kraftfahrzeug mit einer Steuerschaltung sein, sodass das Kraftfahrzeug für einen autonomen Fahrbetrieb mittels der Steuerschaltung ausgerüstet sein kann. Für das besagte Kraftfahrzeug können die Anweisungsdaten für zumindest eine Handlungsanweisung auf der Route des Kraftfahrzeugs von der Servervorrichtung mittels des Zentralmodells berechnet und an das Kraftfahrzeug gesendet werden. Dies kann wiederholt während der Fahrt des Kraftfahrzeugs geschehen, beispielsweise in vorbestimmten Zeitabständen. Das Kraftfahrzeug kann die Route in der realen Umgebung damit virtuell in dem Zentralmodell in der Servervorrichtung parallel und/oder im Voraus abfahren, wobei die Berechnung der Anweisungsdaten mittels des Zentralmodells von der Servervorrichtung durchgeführt werden kann. Die in der Regel aufwändige Berechnung der Anweisungsdaten für das Kraftfahrzeug kann damit auf die Servervorrichtung ausgelagert werden, die die resultierenden Anweisungsdaten an das Kraftfahrzeug senden kann.

Die Handlungsanweisung kann dabei zumindest eines der folgenden Elemente umfassen: einen Fahrbefehl für ein Kraftfahrzeug, eine Textausgabe und/oder Sprachausgabe und/oder eine haptische Ausgabe. Die zuletzt genannten Beispiele für eine Handlungsanweisung sind insbesondere Vorteilhaft, wenn der nutzende Verkehrsteilnehmer ein Fußgänger oder ein Radfahrer ist. Beispielsweise kann einem Fußgänger mit Sehbehinderung ein akustischer und/oder ein haptischer Warnhinweis über ein mobiles Endgerät zur Warnung von einem kreuzenden Radfahrer bereitgestellt werden. In diesem Fall stellt dann das mobile Endgerät eine Steuerschaltung im Sinne der Erfindung dar.

In der Regel ändert sich die Umgebung in der Realität, insbesondere im Stadtverkehr, häufig im Vergleich zum Zentralmodell. Die Veränderung der Umgebung kann in dem Kraftfahrzeug durch einen Vergleich von fahrzeugseitigen Sensordaten, wie beispielsweise Fahrzeugdaten (Geschwindigkeit, Lenkeinschlag), Daten eines Kamerasystems, Daten eines Radarsensors und/oder Daten eines Regensensors, mit dem Zentralmodell bei Erreichen des Kraftfahrzeugs an der jeweiligen realen Umgebung ermittelt werden. Der Vergleich der fahrzeugseitigen Sensordaten mit dem Zentralmodell kann beispielsweise mittels einer im Kraftfahrzeug verbauten Steuerschaltung durchgeführt werden. Nach dem Empfang von Daten des Zentralmodells durch die Steuerschaltung im Kraftfahrzeug bei Erreichen der jeweiligen Umgebung kann mittels der Steuerschaltung auf Basis der fahrzeugseitigen Sensordaten ein fahrzeugseitiges Modell der Umgebung erstellt werden. Dieses lokal im Kraftfahrzeug erzeugte fahrzeugseitiges Modell wir hier auch als Lokalmodell bezeichnet. Das Lokalmodell kann mit dem Zentralmodell der Servervorrichtung verglichen werden. Beispielsweise kann der Unterschied zwischen dem fahrzeugseitigen Lokalmodell und dem Zentralmodell der Servervorrichtung in dem Auftreten eines Radfahrers liegen, welcher von einem fahrzeugseitigen Kamerasystem erfasst, aber von der Servervorrichtung nicht berücksichtigt wurde. Aus der Differenz zwischen dem fahrzeugseitigen Lokalmodell und dem Zentralmodell können mittels der Steuerschaltung Delta-Daten der Umgebung berechnet werden, welche beispielsweise eine Position, Geschwindigkeit und/oder Richtung des Radfahrers oder allgemein eines neu detektierten Objekts umfassen können. Anschließend können die Delta-Daten von der Steuerschaltung an die Servervorrichtung gesendet werden.

Die Servervorrichtung kann das Zentralmodell mittels der Delta-Daten zu der jeweiligen Umgebung aktualisieren. Dann kann die Servervorrichtung mittels des aktualisierten Zentralmodells auch überprüfen, ob eine Korrektur der Anweisungsdaten gemäß einem Korrekturkriterium notwendig ist. Im Beispiel des von der Servervorrichtung nicht berücksichtigten Radfahrers kann mittels des aktualisierten Zentralmodells von der Servervorrichtung festgestellt werden, dass das Kraftfahrzeug einen Mindestabstand zum Radfahrer unterschreitet. Das vorbestimmte Korrekturkriterium kann beispielsweise ein Mindestabstand von 1,5 zum Radfahrer bei einem Vorbeifahren sein. Wenn mittels des aktualisierten Zentralmodells von der Servervorrichtung festgestellt wird, dass auf Basis der bisherigen Anweisungsdaten der Mindestabstand unterschritten wird, kann die Servervorrichtung die Anweisungsdaten auf Basis des aktualisierten Zentralmodells aktualisieren, welche beispielsweise einen Lenkeinschlag zum Einhalten des Mindestabstands vorsehen können. Die aktualisierten Anweisungsdaten können an das entsprechende Kraftfahrzeug zum Durchführen eines Ausweichmanövers zum Einhalten des Mindestabstands gesendet werden.

Im Fall, dass der Verkehrsteilnehmer ein Fußgänger oder ein Radfahrer ist, kann der Verkehrsteilnehmer Handlungsanweisungen als eine akustische oder haptische Ausgabe über ein mobiles Endgerät als Benutzergerät empfangen, das die aktuelle Geoposition des Fußgängers in der realen Umgebung im Zentralmodell der Servervorrichtung nachverfolgt. Beispielsweise kann ein Fußgänger mit Sehbehinderung zur Unterstützung im Straßenverkehr über ein mobiles Endgerät, beispielsweise ein Smartphone mit einer entsprechenden Anwendung als Steuerschaltung, vor einem kreuzenden Radfahrer mittels einer akustischen Ausgabe, wie beispielsweise "Achtung, Radfahrer von links!" gewarnt werden. Ebenfalls kann die akustische Ausgabe mittels einer haptischen Ausgabe, beispielsweise eines Vibrierens, kombiniert oder ersetzt werden.

Durch die Erfindung ergibt sich der Vorteil, dass die Berechnung der Handlungsanweisungen für autonome Kraftfahrzeuge auf eine Servervorrichtung ausgelagert wird, welche die Berechnung in Echtzeit aus einer Makroperspektive oder einer Hubschrauberperspektive der Situation der realen Umgebung statt der alleinigen Perspektive des jeweiligen Verkehrsteilnehmers durchführt. Hierdurch ergibt sich der Vorteil, dass durch die Auslagerung der Echtzeitberechnung der Handlungsanweisungen auf eine Servervorrichtung der Energiebedarf des jeweiligen Verkehrsteilnehmers reduziert werden kann. Dies kann die Komplexität der fahrzeugseitig verbauten Hardware und Software reduzieren, was zu verringertem Energieverbrauch aus Rechenleistung des jeweiligen Kraftfahrzeugs führen kann. Zusätzlich können Kraftfahrzeuge mit einer entsprechenden Steuerschaltung zum autonomen Fahrbetrieb nachgerüstet werden. Ebenfalls können weitere Verkehrsteilnehmer wie beispielsweise Fußgänger mit Sehbehinderung unterstützt werden. Dies kann beispielsweise mittels eines Benutzergeräts mit der Steuerschaltung, beispielsweise ein Smartphone mit einer entsprechenden Anwendung, realisiert werden, welches für eine Person verständliche, akustische und/oder haptische Warnhinweise ausgeben kann.

Zu der Erfindung gehören auch Ausführungsformen, durch die sich zusätzliche Vorteile ergeben.

Eine Ausführungsform sieht vor, dass die Anpassung der Handlungsanweisung von der Servervorrichtung in Abhängigkeit von einer Bewegungsgeschwindigkeit des jeweiligen Verkehrsteilnehmers und/oder einer Verkehrssituation, in welcher sich der jeweilige Verkehrsteilnehmer befindet, priorisiert wird, also es wird entschieden, wessen Handlungsanweisung zuerst und/oder häufiger angepasst wird. Mit anderen Worten, um die Änderungshäufigkeit der jeweiligen realen Umgebung zu berücksichtigen, kann die Handlungsanweisung des jeweiligen Verkehrsteilnehmers entsprechend häufig nachjustiert werden. Durch die Priorisierung kann für den Fall, dass für mehrere Verkehrsteilnehmer eine Anpassung notwendig ist, der sich am schnellsten bewegende zuerst behandelt wird. Insbesondere eine Verkehrssituation, wie sie in einer Stadt im Berufsverkehr oder bei einer hohen Geschwindigkeit des Verkehrsteilnehmers (größer als z.B. 80 km/h) auf einer Autobahn auftreten kann, bringen eine Änderung der aktuellen Verkehrssituation, wie beispielsweise ein Spurwechsel eines anderen Fahrzeugs, mit sich, die die geschwindigkeitsabhängige Priorisierung vorteilhaft machen. Um die häufige Änderung der Verkehrssituation zu berücksichtigen, kann die Frequenz der Nachjustierung der Handlungsanweisung für den jeweiligen Verkehrsteilnehmer nach der Verkehrssituation, in der der jeweilige Verkehrsteilnehmer sich im Moment befindet, und/oder der Geschwindigkeit des jeweiligen Verkehrsteilnehmers entsprechend angepasst werden. Die Priorisierung der Nachjustierung kann dabei anhand der Verkehrssituation und/oder der Geschwindigkeit des Verkehrsteilnehmers erfolgen. So ist in der Stadt im Berufsverkehr eine häufigere Änderung der Verkehrssituation zu erwarten als auch einer wenig befahrenen Autobahn. Hierdurch ergibt sich der Vorteil, dass auch auf plötzliche Ereignisse in der Verkehrssituation, rechtzeitig reagiert werden und die Menge der übertragenen Daten zwischen Verkehrsteilnehmer und Servervorrichtung optimiert werden kann.

Die Priorisierung der Änderungshäufigkeit von Objektdaten eines Verkehrsobjekts im Zentralmodell kann auch entsprechend einer Kategorie des Verkehrsobjekts angepasst werden, da sich in der Regel Fußgänger, Radfahrer und Kraftfahrzeuge mit unterschiedlichen Geschwindigkeiten fortbewegen. Mit Objektdaten sind dabei Daten, die ein Verkehrsobjekt im Zentralmodell beschreiben, wie beispielsweise Objektkategorie, Position, Geschwindigkeit oder Richtung des jeweiligen Verkehrsobjekts gemeint. So sieht eine Ausführungsform vor, dass durch das Zentralmodell eines oder mehrere Verkehrsobjekte beschrieben werden und jedes Verkehrsobjekt einer aus mehreren vorbestimmten Objektkategorien zugeordnet ist und für jede Objektkategorie eine Änderungshäufigkeit festgelegt ist, die angibt, mit welcher Höchstrate Delta-Daten für jedes Verkehrsobjekt dieser Objektkategorie höchstens erzeugt werden sollen, und/oder eine Priorität festgelegt ist, durch welche eine Reihenfolge in Bezug auf das Ermitteln des Unterschieds festgelegt wird, um eine zur Verfügung stehende Rechenzeit zu fokussieren.

Mit anderen Worten, im Zentralmodell können die Verkehrsobjekte in Objektkategorien kategorisiert werden, wobei für die jeweilige Objektkategorie die Aktualisierungsfrequenz bestimmt ist. So können im Zentralmodell Verkehrsobjekte beispielsweise in die Objektkategorien Fußgänger, Kraftfahrzeug oder Radfahrer kategorisiert werden, da sich die Elemente einer jeweiligen Objektkategorie mit einer unterschiedlichen Geschwindigkeit fortbewegen können. So kann beispielsweise die Objektkategorie Radfahrer eine größere Änderungshäufigkeit aufweisen als ein Fußgänger, da der Radfahrer im gleichen Zeitintervall eine größere Distanz zurücklegen kann. Wenn eine Aktualisierung des Zentralmodells mittels Delta-Daten betreffend eine Anzahl von Verkehrsobjekten in einer realen Umgebung in einem vorgegebenen Zeitintervall erfolgt, kann die Aktualisierung der Position des jeweiligen Verkehrsobjekts mittels der jeweiligen Objektkategorie von der Servervorrichtung vorgenommen werden. So kann beispielsweise zunächst die Position eines Radfahrers aktualisiert werden als die eines Fußgängers.

Die Priorisierung der Aktualisierung der Objektdaten unterschiedlicher Verkehrsobjekte im Zentralmodell kann ebenfalls in Abhängigkeit der Verkehrssituation variieren. So kann beispielsweise in einer Umgebung mit Stadtverkehr ein Radfahrer eine höhere Priorisierung als ein Kraftfahrzeug aufweisen als im Überlandverkehr. Eine hohe Priorisierung in der Aktualisierung der Objektdaten im Zentralmodell entspricht dabei einer genauen Überwachung des Verhaltens des jeweiligen Verkehrsobjekts. Eine von dem Beispiel abweichende Kategorisierung der Verkehrsobjekte ist ebenfalls möglich.

Hierdurch ergibt sich der Vorteil, dass der notwendigen Beobachtungshäufigkeit der jeweiligen Verkehrsobjekte Rechnung getragen wird und/oder Rechenzeit gespart werden kann. Somit kann die Reaktionszeit des Verkehrsteilnehmers verkürzt werden und der Verkehrsteilnehmer auf plötzliche Veränderungen der Verkehrssituation der realen Umgebung, wie beispielsweise ein plötzliches Ausscheren eines Radfahrers, reagieren.

Eine Ausführungsform sieht vor, dass die Servervorrichtung das Zentralmodell zusätzlich auf der Grundlage von Sensordaten von zumindest einem der Verkehrsteilenehmer erzeugt und/oder aktualisiert. Mit anderen Worten, das Zentralmodell kann mit den Sensordaten, die die jeweiligen Verkehrsteilnehmer bereitstellen, versorgt werden. So kann dies ein Kraftfahrzeug mit einer Steuerschaltung sein, das ein Kamerasystem umfasst und mittels des Kamerasystems einen Radfahrer am Straßenrand erkennt. Dabei kann das Kamerasystem des Kraftfahrzeugs ebenfalls eine Geschwindigkeit und Richtung des beobachteten Radfahrers schätzen. Die Delta-Daten, die als Differenz der vom Kraftfahrzeug beobachteten Umgebung mit dem Zentralmodell der Umgebung gebildet werden, können das Zentralmodell in der Servervorrichtung aktualisieren und/oder eine Datenmenge von Delta-Daten einer Anzahl von Verkehrsteilenehmern können das Zentralmodell erzeugen. Hierdurch ergibt sich der Vorteil, dass das Zentralmodell die reale Umgebung virtuell abbilden kann und auf dieser Basis aus einer Makroperspektive über eine Verkehrssituation einer realen Umgebung eine Handlungsanweisung für die jeweiligen Verkehrsteilnehmer in der Umgebung berechnet werden kann.

Für die Erzeugung des Zentralmodells kann ebenfalls eine Vielzahl an weiteren Daten verwendet werden. So sieht eine Ausführungsform vor, dass die Sensordaten zumindest einige der folgenden umfasst: Geopositionsdaten eines aktuellen Aufenthaltsorts der Verkehrsteilnehmer, Geschwindigkeitsdaten einer Bewegungsgeschwindigkeit der Verkehrsteilnehmer, Beobachtungsdaten zu der Umgebung aus der Sicht der Verkehrsteilnehmer.

Mit anderen Worten, die Verkehrsteilnehmer können jeweils eine Anzahl von unterschiedlichen Daten an die Servervorrichtung zur Aktualisierung und/oder Erzeugung des Zentralmodells senden. Beispielsweise kann ein Fußgänger mittels eines Benutzergeräts mit der Steuerschaltung seine aktuelle Geoposition an die Servervorrichtung senden, die dann in einem Zentralmodell zur Berechnung einer Handlungsanweisung für einen anderen Verkehrsteilnehmer verwendet wird. Wenn der Verkehrsteilnehmer ein Kraftfahrzeug ist, kann die Steuerschaltung des Kraftfahrzeugs fahrzeugbezogene Daten aus einer Sensorschaltung des Kraftfahrzeugs, wie beispielsweise Geschwindigkeit, Lenkwinkel, Route, beobachtete Objekte von Radarsensoren und/oder Kamerasensoren für das Senden an die Servervorrichtung berücksichtigen. Ebenfalls kann die Steuerschaltung mittels einer Sensorfusionsapplikation Resultate aus einer Verarbeitung der Sensordaten des Kraftfahrzeugs an die Servervorrichtung senden. Ebenfalls können Daten von Gebäuden, wie beispielsweise von einer Überwachungskamera erfasste Fußgänger an die Servervorrichtung zur Aktualisierung und/oder Erzeugung des Zentralmodells gesendet werden.

Hierdurch ergibt sich der Vorteil, dass das Zentralmodell aus einer Vielzahl von unterschiedlichen Quellen mit Daten gespeist wird und damit eine Makroperspektive einer Verkehrssituation einer realen Umgebung für die Berechnung einer Handlungsanweisung erzeugt werden kann.

Des Weiteren ist es vorteilhaft, wenn eine zukünftige Position von Verkehrsobjekten abgeschätzt werden kann. So sieht eine Ausführungsform vor, dass eine Geoposition und/oder eine Relativposition eines sich in der Umgebung bewegenden Verkehrsobjekts im Zentralmodell von der Servervorrichtung extrapoliert wird. Mit anderen Worten, aus zumindest einer Geoposition und/oder eine Relativposition eines Verkehrsobjekts zu einem bekannten Verkehrsteilnehmer und/oder einem Verkehrsobjekt kann die Servervorrichtung eine zukünftige Position des Verkehrsobjekts schätzen. Beispielsweise können eine Geschwindigkeit und Richtung des Verkehrsobjekts aus einer Anzahl von Geopositionen bestimmt werden oder alternativ eine Richtung anhand einer Erkennung und Kategorisierung des Verkehrsobjekts bestimmt werden. So kann eine Geschwindigkeit beispielsweise mittels einer Durchschnittgeschwindigkeit der Objektkategorie des jeweiligen Verkehrsobjekts geschätzt werden. Beispielsweise kann für Fußgänger angenommen werden, dass diese sich mit einer Geschwindigkeit von 6 km/h fortbewegen. Aus der Position, Richtung und Geschwindigkeit kann die Servervorrichtung eine zukünftige Position des jeweiligen Objekts und/oder Verkehrsteilnehmers schätzen, sodass beispielsweise ein Kraftfahrzeug als Verkehrsteilnehmer, welches von der Servervorrichtung eine Handlungsanweisung erhält und an einer Kreuzung nach rechts abbiegen möchte, bereits vor dem Abbiegevorgang einen herannahenden Radfahrer berücksichtigen kann, indem zur dazugehörige Handlungsanweisung zum Rechtsabbiegen ein Bremsvorgang hinzugefügt wird.

Hierdurch ergibt sich der Vorteil, dass das Zentralmodel auch zwischen den Aktualisierungen die reale Umgebung in Echtzeit virtuell abbildet und somit stets nah am tatsächlichen Geschehen in der realen Umgebung bleiben kann.

Da die Servervorrichtung die reale Umgebung stets virtuell abbildet und Bewegung der Verkehrsteilnehmer und Verkehrsobjekte extrapoliert, kann das Zentralmodell der Servervorrichtung als eine Art Unterbewusstsein für den jeweiligen Verkehrsteilnehmer fungieren, sodass Handlungsanweisungen schnell berechnet werden können. So sieht eine Ausführungsform vor, dass die Servervorrichtung die Anweisungsdaten für Handlungsanweisungen mit einem zukünftigen Ausführungszeitpunkt zeitlich im Voraus aussendet, sodass sich zwischen einem Zeitpunkt des Aussendens der Anweisungsdaten und dem Ausführungszeitpunkt ein Latenzwert ergibt, wobei der Latzenzwert von einer Geschwindigkeit des Verkehrsteilnehmers und/oder einer Verkehrssituation in einem Bereich vor dem Verkehrsteilnehmer abhängig eingestellt wird. Mit anderen Worten, zum Reagieren eines Verkehrsteilnehmers auf eine Verkehrssituation in einer realen Umgebung kann die Handlungsanweisung für den jeweiligen Verkehrsteilnehmer bereits vor Erreichen der realen Umgebung an den Verkehrsteilnehmer gesendet werden. Der Latenzwert entspricht dabei der Zeitverschiebung zwischen dem Senden der Handlungsanweisung als Aussendezeit und dem Zeitpunkt des Erreichens des Verkehrsteilnehmers an der jeweiligen realen Umgebung als Ausführungszeitpunkt der Handlungsanweisung. Der besagte Latenzwert kann dabei beispielsweise in Abhängigkeit von der Verkehrssituation und/oder einer Geschwindigkeit des Verkehrsteilnehmers variieren. So kann es beispielsweise vorteilhaft sein, wenn ein Kraftfahrzeug als Verkehrsteilnehmer, das sich auf einer Autobahn bewegt im Vorfeld beispielsweise 3 Minuten vor einem geschätzten Erreichen an einem Stauende die Handlungsanweisung erhält, die Geschwindigkeit derart zu reduzieren, sodass das Kraftfahrzeug an einem Stauende rechtzeitig anhält.

Hierdurch ergibt sich der Vorteil, dass auf Verkehrssituationen frühzeitig reagiert und damit eine vorausschauendes Bewegen im Straßenverkehr für den jeweiligen Verkehrsteilnehmer ermöglicht werden kann.

Eine Ausführungsform der Erfindung sieht vor, dass der Verkehrsteilnehmer die jeweilige Handlungsanweisung in einer Simulation um einen Latenzwert zeitlich voraus versetzt durchführt und mittels des Zentralmodells eine sich daraus ergebende zukünftige Verkehrssituation schätzt. Mit anderen Worten, der jeweilige Verkehrsteilnehmer kann mittels der Simulation seiner Handlungsanweisung zum Ausführungszeit und des Zentralmodells eine zukünftige Verkehrssituation als Folge seiner Handlungsanweisung abschätzen. Wenn ein Kraftfahrzeug als Verkehrsteilnehmer beispielsweise einen Fahrradfahrer, den das Kraftfahrzeug in abgeschätzt 30 Sekunden erreichen wird, als Handlungsanweisung überholen soll, kann bereits zum Aussendezeitpunkt der besagten Handlungsanweisung von der Steuerschaltung simuliert werden, ob das vorgesehene Lenkmanöver der Handlungsanweisung zum Überholen des Radfahrers dazu führt, beispielsweise in einen Gegenverkehr zu geraten. Wenn sich aus der Schätzung der zukünftigen Verkehrssituation auf Basis der Simulation und des Zentralmodells durch die Steuerschaltung des Verkehrsteilnehmers sich eine Gefahrensituation ergibt, kann dies als Teil der Delta-Daten an die Servervorrichtung gesendet werden, um die Handlungsanweisung gegebenenfalls zu korrigieren. Hierdurch ergibt sich der Vorteil, dass sich eine doppelte Kontrolle der Folgenabschätzung der jeweiligen Handlungsanweisungen an den Verkehrsteilnehmer jeweils einmal durch die Servervorrichtung und den Verkehrsteilnehmer ergibt.

Eine Ausführungsform sieht vor, dass der jeweilige Verkehrsteilnehmer zum Vergleichen der Umgebung mit dem Zentralmodell folgende Schritte durchführt: mittels Sensordaten einer Sensorschaltung, die der Verkehrsteilnehmer mit sich führt, wird das bereits erwähnte digitale Lokalmodell der Umgebung erstellt und ein Unterschied zwischen dem Lokalmodell und dem Zentralmodell ermittelt und durch die Delta-Daten als Modelldifferenz beschrieben, wobei der Verkehrsteilnehmer die Delta-Daten an die Servervorrichtung sendet. Mit anderen Worten, der Verkehrsteilnehmer kann von der Servervorrichtung Daten zum Zentralmodell und Anweisungsdaten für eine Handlungsanweisung in der realen Umgebung empfangen und an die Servervorrichtung Delta-Daten als Differenz des Lokalmodells und dem Zentralmodell senden. Die Servervorrichtung kann Daten zum dem Zentralmodell einer realen Umgebung mit der jeweiligen Handlungsanweisung an den Verkehrsteilnehmer senden. Der Verkehrsteilnehmer kann bei Erreichen der Umgebung mittels der Sensordaten der bordeigenen Sensorschaltung ein Lokalmodell der Umgebung analog zum Zentralmodell erstellen. Aus der Differenz des Lokalmodells und dem Zentralmodell werden Delta-Daten oder ein Delta-Datum generiert, die den Unterschied zwischen dem Lokalmodell und dem Zentralmodell abbilden kann. Hierbei wird mit Delta-Datum ein Singular von Delta-Daten bezeichnet. Der Begriff Delta-Daten kann ebenfalls eine einzelne Einheit umfassen. Der Verkehrsteilnehmer kann die Delta-Daten dann an die Servervorrichtung senden.

Hierdurch ergibt sich der Vorteil, dass die Datenmenge, die zwischen dem jeweiligen Verkehrsteilnehmer und der Servervorrichtung übertragen wird, reduziert werden kann, da keine Rohdaten (also Sensordaten) übertragen werden müssen, sondern nur die finalen neuen Modellparameter oder ein Delta-Wert für den jeweiligen Modellparameter. Ebenfalls kann die Servervorrichtung den Rechenaufwand für die Aktualisierung der Handlungsanweisungen für die aktuelle Verkehrssituation der jeweiligen realen Umgebung tragen.

Die Erfindung sieht auch eine Servervorrichtung vor, wobei die Servervorrichtung dazu eingerichtet ist, die die Servervorrichtung betreffenden Schritte des oben beschriebene Verfahrens durchzuführen. Mit anderen Worten, die Servervorrichtung ist dazu eingerichtet, ein Zentralmodell einer realen Umgebung bereitzustellen, für Verkehrsteilnehmer Handlungsanweisungen zu berechnen und die jeweilige Handlungsanweisung mit dem Zentralmodell ganz oder teilweise an den Verkehrsteilnehmer zu senden. Die Servervorrichtung kann auch dazu eingerichtet sein, Delta-Daten, die einen Unterschied zwischen einem Lokalmodell einer realen Umgebung aus der Perspektive eines Verkehrsteilnehmers und dem Zentralmodell beinhalten können, zu empfangen und das Zentralmodell mittels einer Anzahl von Delta-Daten zu erzeugen und/oder zu aktualisieren. Des Weiteren kann die Servervorrichtung dazu eingerichtet sein, auf Basis des aktualisierten Zentralmodells anhand eines vorbestimmten Korrekturkriteriums, wie beispielsweise ein gesetzlich vorgeschriebener Mindestabstand, die jeweilige Handlungsanweisung für einen Verkehrsteilnehmer nachzujustieren und die nachjustierte Handlungsanweisung an den Verkehrsteilnehmer zu senden. Hierdurch ergibt sich der Vorteil, dass die Berechnung der Handlungsanweisungen für einen Verkehrsteilnehmer auf die Servervorrichtung ausgelagert wird, wobei die Servervorrichtung die Handlungsanweisung auf Basis einer Makroperspektive einer Verkehrssituation einer realen Umgebung berechnen kann.

Die Erfindung sieht auch eine Steuerschaltung für einen Verkehrsteilnehmer vor, wobei die Steuerschaltung dazu eingerichtet ist, aus einer Servervorrichtung Modelldaten eines Zentralmodells einer Umgebung des Verkehrsteilnehmers zu empfangen und Delta-Daten, welche einen durch den Verkehrsteilnehmern erfassten Unterschied zwischen der Umgebung und dem Zentralmodell beschreibt, zu ermitteln und an die Servervorrichtung auszusenden, und aus der Servervorrichtung Anweisungsdaten mit Handlungsanweisungen für eine Handlung in der Umgebung zu empfangen und die Handlungsanweisung danach in Abhängigkeit von aktualisierten Anweisungsdaten aus der Servervorrichtung anzupassen. Mit anderen Worten, die Steuerschaltung kann als Interface zwischen der Servervorrichtung und dem Verkehrsteilnehmer dienen, der beispielsweise ein Kraftfahrzeug oder eine Person, die beispielsweise ein mobiles Endgerät als Benutzergerät mit sich trägt, sein kann. Dabei kann die Steuerschaltung derart ausgelegt sein, dass sie Modelldaten zum einem Zentralmodell von der Servervorrichtung empfangen und Delta-Daten, die eine Differenz zwischen einem Lokalmodell einer realen Umgebung und dem Zentralmodell der realen Umgebung beschreiben, ermitteln und an die Servervorrichtung senden kann.

Des Weiteren kann die Steuerschaltung dazu eingerichtet sein, von der Servervorrichtung eine Handlungsanweisung für den jeweiligen Verkehrsteilnehmer zu empfangen und die Handlungsanweisung gemäß einer empfangenen aktualisierten Handlungsanweisung anzupassen. Ebenfalls kann die Steuerschaltung dazu ausgelegt sein, die Handlungsanweisung in einem Kraftfahrzeug als Verkehrsteilnehmer auszuführen, beispielsweise ein Lenkmanöver oder eine Bremsung zu veranlassen. Die Steuerschaltung kann auch dazu eingerichtet sein, aus Sicht der Servervorrichtung als eine Fernsteuerung des Kraftfahrzeugs für die Servervorrichtung zum Ausführen der Handlungsanweisung zu fungieren. Ebenfalls kann die Steuereinrichtung dazu eingerichtet sein, in einem Benutzergerät, das eine Person mit sich trägt, eine Sprach-, Text- und/oder haptische Ausgabe der Handlungsanweisung zu veranlassen. Beispielsweise kann über eine Smartphone mit einer entsprechenden Anwendung als Benutzergerät einem Fußgänger mit Sehbehinderung ein Warnhinweis vor einem schnell herannahenden Radfahrer mittels einer Sprachausgabe und einer Vibration des Smartphones ausgegeben werden.

Hierdurch ergibt sich der Vorteil, dass mittels der Steuerschaltung Verkehrsteilnehmer dazu ausgerüstet werden können, das oben beschriebene Verfahren zur Koordination von Verkehrsteilnehmern durchzuführen. Insbesondere kann ein Kraftfahrzeug mit der Steuerschaltung nachgerüstet werden, sodass auch dieses mit einer autonomen Fahrfunktion ausgerüstet werden kann.

Die erfindungsgemäße Steuerschaltung kann eine Prozessoreinrichtung aufweisen, die dazu eingerichtet ist, die besagten Verfahrensschritte durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Verfahrensschritte durchzuführen. Der Programmcode kann in einem Datenspeicher der Prozessoreinrichtung gespeichert sein.

Der erfindungsgemäße Verkehrsteilnehmer in Form eines Kraftfahrzeugs ist bevorzugt als Kraftwagen, insbesondere als Personenkraftwagen oder Lastkraftwagen, oder als Personenbus oder Motorrad ausgestaltet.

Die Erfindung umfasst auch Realisierungen, die eine Kombination der Merkmale mehrerer der beschriebenen Ausführungsformen umfassen.

Im Folgenden sind Ausführungsbeispiele der Erfindung beschrieben. Hierzu zeigt:
- Fig. 1: eine Verkehrssituation, in welcher ein Verkehrsteilnehmer mittels des von einer Servereinheit bereitgestellten Zentralmodells zu einer realen Umgebung koordiniert wird;
- Fig. 2: eine Übersicht über den Prozess der Aktualisierung des Zentralmodells mit Delta-Daten.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

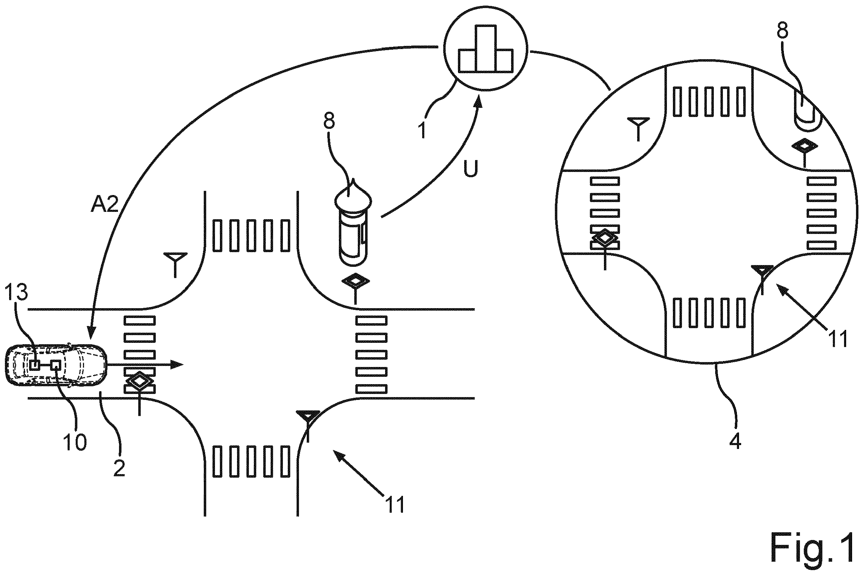

Fig. 1 zeigt eine Verkehrssituation in einer realen Umgebung 11, in welcher ein Kraftfahrzeug 2 als Verkehrsteilnehmer mittels eines Zentralmodells 4 der realen Umgebung 11, welches von einer Servervorrichtung 1 bereitgestellt wird, koordiniert wird. Als reale Umgebung 11 ist in diesem Beispiel eine Kreuzung mit einem Gebäude 8 als Litfaßsäule dargestellt. Auf die Kreuzung der realen Umgebung 11 bewegt sich in der Rolle eines Verkehrsteilnehmers ein autonom fahrendes Kraftfahrzeug 2 von links auf die Kreuzung zu. Die Fahrtrichtung des Kraftfahrzeugs wird hierbei durch einen Pfeil dargestellt. Das autonom fahrende Kraftfahrzeug 2 weist eine Steuerschaltung 10 auf, die von der Servervorrichtung 1 Anweisungsdaten A2 erhält. Ebenso kann das Kraftfahrzeug 2 eine Sensorschaltung 13 aufweisen. Die Sensorschaltung 13 bezeichnet dabei eine Zusammenschaltung bordeigener Sensoren, mit welchen das Umfeld des Kraftfahrzeugs 2 überwacht werden kann. Das können beispielsweise ein Kamerasensor, ein Radarsensor und/oder auch allgemeine Fahrzeugdaten wie beispielsweise eine Fahrzeuggeschwindigkeit oder ein aktueller Lenkwinkel sein. Die Steuerschaltung 10 ist dabei mit der Sensorschaltung 13 zum Datenaustausch verbunden. Die Anweisungsdaten A2 sind hierbei Handlungsanweisungen, die direkt von dem Kraftfahrzeug 2 ausgeführt werden können. Die Anweisungsdaten A2 können beispielsweise einen Lenkwinkel, hier beispielsweise 0° für eine Geradeausfahrt, und eine konstante Geschwindigkeit von 50 km/h beinhalten, wenn sich beispielsweise das Kraftfahrzeug 2 auf der Vorfahrtstraße über die Kreuzung in der realen Umgebung 11 ohne Verkehr bewegt. Die Anweisungsdaten A2 werden hierbei von der Servervorrichtung 1 mittels des Zentralmodells 4 berechnet und an die Steuerschaltung 10 des Kraftfahrzeugs 2 mit einer Latenzzeit vor Erreichen der Kreuzung der realen Umgebung 11 gesendet.

Das Zentralmodell 4 der realen Umgebung 11 wird in der Servervorrichtung 1 mittels Umgebungsdaten U erstellt und aktualisiert. Die Umgebungsdaten U können dabei aus einer Anzahl an Quellen stammen. So können Quellen für Umgebungsdaten U beispielsweise eine digitale Straßenkarte, ein Verkehrsleitsystem (Verkehrszeichen, Ampelanlagen, Verkehrsfluss, Verkehrsdichte), Wetterdaten, geographische Information, Daten eines Gebäudesicherheitssystems (Überwachungskamerasystem), geographische Information von Verkehrsteilnehmern sein. Das Zentralmodell 4 kann damit einem aktuellen virtuellen Abbild der realen Umgebung 11 entsprechen. Damit hat die Servervorrichtung 1 sozusagen eine Makroperspektive auf das Verkehrsgeschehen der realen Umgebung 11, da sie viele Perspektiven der einzelnen Quellen der Umgebungsdaten U miteinander verbinden und deshalb von oben aus einer Art Hubschrauberperspektive auf die Verkehrssituation der realen Umgebung 11 blicken kann. Auf dieser Informationsgrundlage kann die Servervorrichtung 1 die Anweisungsdaten A2 als Handlungsanweisung an das Kraftfahrzeug 2 berechnen. Damit kann das Kraftfahrzeug 2 mittels der Anweisungsdaten A2 im autonomen Fahrbetrieb besonders vorausschauend fahren.

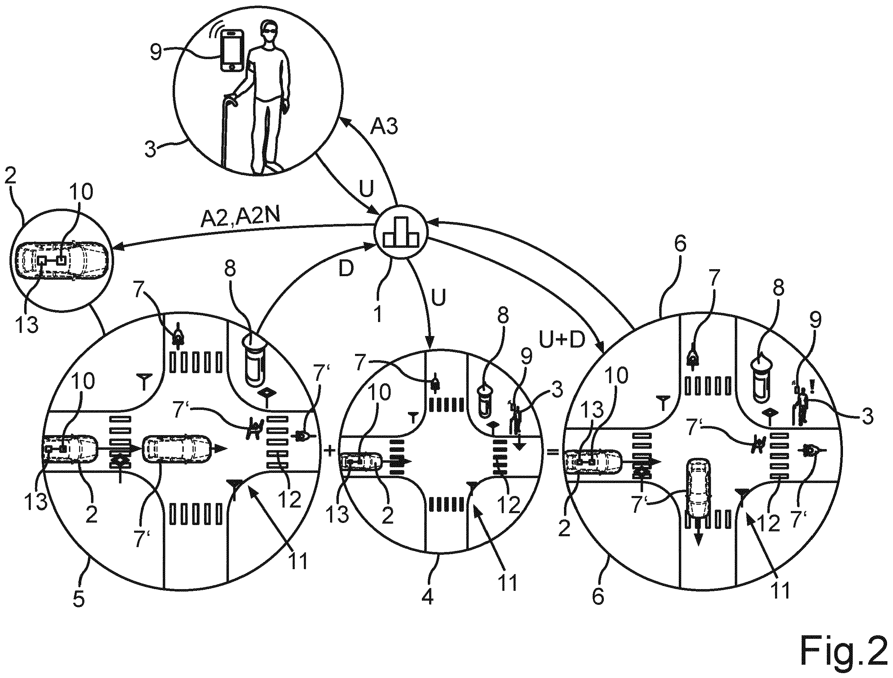

Ein Beispiels für das Verfahren zur Koordination von mehreren Verkehrsteilnehmern 2, 3 wird in Fig. 2 gezeigt.

Fig. 2 zeigt ein Beispiel für die Aktualisierung einer Handlungsanweisung bei der Koordination von Verkehrsteilnehmern im Straßenverkehr einer realen Umgebung 11. Der Vorgang zeigt zwei Verkehrsteilnehmer 2 und 3, wobei der eine Verkehrsteilnehmer ein autonom fahrendes Kraftfahrzeug 2 mit der Steuerschaltung 10 und der Sensorschaltung 13 ist und der andere Verkehrsteilnehmer eine Person 3 mit Sehbehinderung ist, die als Unterstützung zur Orientierung ein Benutzergerät 9, das eine Steuerschaltung 10 integriert hat, mit sich führt. Beispielsweise kann das Benutzergerät 9 mit der entsprechenden Steuerschaltung 10 als ein Smartphone mit einer entsprechenden Anwendung ausgelegt sein. Im Kontext von Fig. 2 wird dies als Benutzergerät 9 bezeichnet. Ebenfalls wird als Verkehrsteilnehmer eine Einheit bezeichnet, die ein Benutzer des vorgestellten Verfahrens zur Koordination von Verkehrsteilnehmern ist und damit eine Handlungsanweisung von der Servervorrichtung erhalten kann, und als Verkehrsobjekt eine Einheit, die in der Verkehrssituation eine Teilnehmerrolle einnimmt. Verkehrsobjekte können daher Fußgänger, Kraftfahrzeuge oder Radfahrer sein.

Von der realen Umgebung 11 erstellt die Servervorrichtung 1 ein Zentralmodell 4, welches in diesem Beispiel die Verkehrsteilnehmer Kraftfahrzeug 2 und die Person 3 beinhaltet. Ferner ist der Servervorrichtung 1 aus den Umgebungsdaten U als Verkehrsobjekt 7 ein Radfahrer bekannt. Der besagte Radfahrer kann beispielsweise von einer Überwachungskamera eines Gebäudes der realen Umgebung 11 oder von einem weiteren Verkehrsteilnehmer, beispielsweise vom Kraftfahrzeug 2 als Delta-Daten, registriert worden sein und in die Umgebungsdaten U einfließen. Delta-Daten können auch Teil von Umgebungsdaten U sein. Von der Person 3 mit dem Benutzergerät 9 ist der Servervorrichtung 1 die Geoposition bekannt. Das Kraftfahrzeug 2 bewegt sich auf der Vorfahrtstraße über die Kreuzung der realen Umgebung 11, was durch einen Richtungspfeil angedeutet ist.

In einem autonomen Fahrbetrieb des Kraftfahrzeugs 2 ist das Ziel und die Route in der Regel bekannt. Für die Handlungsanweisungen des autonomen Fahrbetriebs ist nach dem Verfahren vorgesehen, dass das Kraftfahrzeug 2 die Route in der realen Umgebung virtuell im Zentralmodell 4 abfährt. Dabei fährt das Kraftfahrzeug 2 die Route in der virtuellen Umgebung des Zentralmodells 4 um einen Latenzwert im Vergleich zur realen Umgebung 11 voraus. Die Handlungsanweisungen werden von der Servervorrichtung 1 für das Kraftfahrzeug 2 vor Erreichen des Kraftfahrzeugs 2 an der realen Umgebung 11 als Anweisungsdaten A2 berechnet und an die Steuerschaltung 10 des Kraftfahrzeugs 2 gesendet. Ebenfalls werden vor dem Erreichen des Kraftfahrzeugs 2 an der realen Umgebung 11 Daten des Zentralmodells 4 der Umgebung 11 an die Steuerschaltung 10 gesendet. Dies hat den Vorteil, dass bereits konkrete Handlungsanweisungen für das Kraftfahrzeug 2 in der realen Umgebung 11 bereits vorliegen und das Kraftfahrzeug 2 daher "unterbewusst" weiß, also in dem Kraftfahrzeug 2 bekannt ist, welche Handlungen es in der Umgebung 11 durchzuführen hat. Damit weist das Kraftfahrzeug 2 eine Art künstliches Unterbewusstsein auf.

Im gezeigten Beispiel beinhalten die ursprünglichen Anweisungsdaten A2 nach der Verkehrssituation im Zentralmodell 4 als Handlungsanweisung, dass sich das Kraftfahrzeug 2 analog geradeaus entlang der Vorfahrtstraße bewegen soll und am rechten Zebrastreifen anhalten soll, damit die Person 3 hinter dem Gebäude 8, das in diesem Beispiel eine Litfaßsäule ist, über den rechten Zebrastreifen gehen kann. Die Richtung der Person 3 kann von der Servervorrichtung aufgrund ihrer Geopositionen extrapoliert werden. Beispielsweise kann die Servervorrichtung 1 auf Basis der letzten drei Geopositionen der Person 3 darauf schließen, dass die Person 3 den Zebrastreifen 12 mit einer hohen Wahrscheinlichkeit überqueren möchte. Alternativ kann die Servervorrichtung annehmen, dass die Person 3 den Zebrastreifen 12 überqueren möchte, wenn sich die Person 3 innerhalb eines Mindestabstands vom Zebrastreifen 12 entfernt befindet.

Da sich die Person 3 hinter dem Gebäude 8 befindet, ist sie aus der Perspektive des Kraftfahrzeugs 2 nicht sichtbar. Die Anweisungsdaten A2 können daher von der Servervorrichtung 1 aus einer Makroperspektive berechnet werden, da die Servervorrichtung 1 mittels des Zentralmodells 4 eine Art Hubschrauberblick auf die Verkehrssituation der realen Umgebung 11 haben kann.

Es kommt jedoch vor, dass die Servervorrichtung 1 nicht die vollständige Verkehrssituation der realen Umgebung 11 abbildet. So kann das Zentralmodell 4 um ein Lokalmodell 5 des Kraftfahrzeugs 2 ergänzt werden. Bei Erreichen des Kraftfahrzeugs 2 an der realen Umgebung 11 kann das Kraftfahrzeug 2 mittels einer Bordeigenen Hardware, die mit der Steuerschaltung 10 verbunden ist, aus der eigenen Perspektive aus einem Aggregat an Sensordaten einer bordeigenen Sensorschaltung 13 ein Lokalmodell 5 der realen Umgebung 11 erstellen. Die bordeigene Sensorschaltung 13 kann beispielsweise ein Kamerasystem und/oder ein Radarsensorsystem umfassen. Des Weiteren können die bordeigenen Sensordaten des Kraftfahrzeugs 2 eine Menge aus Fahrzugzustandsdaten umfassen, wie beispielsweise Geoposition, Lenkwinkel oder aktuelle Fahrzeuggeschwindigkeit.

Aus den bordeigenen Sensordaten der Sensorschaltung 13 kann das Kraftfahrzeug 2 mittels bordeigener Hardware ein Lokalmodell 5 der realen Umgebung 11 analog zum Zentralmodel 4 erstellen. Dabei sind aus der Perspektive des Kraftfahrzeus 2 im Lokalmodell 5 zusätzliche Verkehrsobjekte 7' in der realen Umgebung 11 sichtbar, die im Zentralmodell 4 der Servervorrichtung 1 nicht sichtbar waren. So tauchen im Lokalmodell 5 im Unterschied zu Zentralmodell 4 zusätzlich ein Kraftfahrzeug 7' in der Mitte der Kreuzung, ein die Straße überquerender Fußgänger 7' und ein weiter Radfahrer 7' als weitere Verkehrsobjekte 7' auf. Im Lokalmodell 5 ist die Person 3 nicht vorhanden, da sie aus der Perspektive des Kraftfahrzeugs 2 nicht sichtbar ist, weil die Person 3 vom Gebäude 8 verdeckt wird. Dies gilt ebenso für den Radfahrer 7 als Verkehrsobjekt im Zentralmodell 4, weil sich dieser noch zu weit von der Kreuzung entfernt in der Seitenstraße befindet. Aus dem Lokalmodell 5 und dem Zentralmodell 4 zur realen Umgebung 11 kann nun die Steuerschaltung Delta-Daten D beispielsweise als eine Differenz des Lokalmodells 5 zum Zentralmodell 4 ermitteln und an die Servervorrichtung 1 senden. Die Delta-Daten D umfassen in diesem Beispiel die zusätzlichen Verkehrsobjekte 7'.

Die Servervorrichtung aktualisiert das Zentralmodell 4 mit den Delta-Daten D und den Umgebungsdaten U und erstellt ein aktualisiertes Zentralmodell 6, in welchem die Verkehrsobjekte 7 und 7', sowie das Kraftfahrzeug 2 und die Person 3 als Verkehrsteilnehmer auftreten. Auf Basis des aktualisierten Zentralmodells 6 entscheidet die Servervorrichtung 1 mittels eines vorgegebenen Korrekturkriteriums, ob die Handlungsanweisungen für die Verkehrsteilnehmer 2 und 3 korrekturbedürftig sind.

Für die Person 3, die den Zebrastreifen 12 überqueren möchte, kann beispielsweise das Korrekturkriterium ein Unterschreiten einer Distanz des Radfahrers rechts im aktualisierten Zentralmodell 6 als Verkehrsobjekt 7' zum Zebrastreifen 12 sein, die die Servervorrichtung 1 dazu veranlassen kann, an die Person 3 als Anweisungsdaten A3 zu senden, die als Handlungsanweisung eine akustische und/oder haptische Warnmeldung beinhalten. Die Anweisungsdaten A3 können von dem Benutzergerät 9 der Person 3 empfangen und die entsprechende Handlungsanweisung als eine akustische und/oder haptische Ausgabe, beispielsweise als ein Vibrieren, ausgegeben werden. Insbesondere für Personen mit einer Sehbehinderung kann dies eine Ergänzung zur Erhöhung der Sicherheit im Straßenverkehr sein.

Für das Kraftfahrzeug 2 können ebenfalls auf Basis eines Korrekturkriteriums aktualisierte Anweisungsdaten A2N gesendet werden. Im Falle des Kraftfahrzeugs 2 handelt es sich dabei um eine nachjustierte Handlungsanweisung, die ein Delta zu den bisherigen Anweisungsdaten A2 sein kann. So taucht im Bild des aktualisierten Zentralmodells 6 ein weiteres Kraftfahrzeug 7' als Verkehrsobjekt zusätzlich auf, was auf Basis der bisherigen Anweisungsdaten A2 zu einem Unterschreiten eines Mindestabstands des Kraftfahrzeugs 2 zum Kraftfahrzeug 7' führen würde. Ebenfalls ist mit einem Linksabbiegen des Radfahrers 7' zu rechnen. Da das Kraftfahrzeug 7' als Verkehrsobjekt zu einer Objektkategorie Kraftfahrzeug und der Radfahrer 7' als Verkehrsobjekt zur Objektkategorie Radfahrer von der Servervorrichtung 1 zugeordnet werden kann, kann die Aktualisierung der Geoposition in einem Zeitintervall und damit die jeweilige Beobachtungsintensität von der Servervorrichtung 1 für die aktualisierten Anweisungsdaten A2N intensiviert werden. Beispielsweise kann in einem vorgegebenen Zeitintervall die Aktualisierung der Geoposition des Kraftfahrzeugs 7' gegenüber den Radfahrer 7' einerseits nach der Objektkategorie, andererseits nach der Distanz zum Kraftfahrzeug 2 priorisiert werden. Als Objektkategorie für die Verkehrsobjekte 7 und 7' kommen beispielhaft Fußgänger, Kraftfahrzeug und Radfahrer in Betracht. Im besagten Beispiel kann eine Priorität folgendermaßen aussehen: Am genauesten wird von der Servervorrichtung 1 das Kraftfahrzeug 7' beobachtet, weil es die kürzeste Distanz zum Kraftfahrzeug 2 aufweist. Als nächstes wird von der Servervorrichtung 1 der Fußgänger 7' beobachtet, weil er die nächste Distanz zum Kraftfahrzeug 2 aufweist, und schließlich die Radfahrer 7 und 7', da sie vom Kraftfahrzeug 2 am weitesten entfernt sind.

Für die Aktualisierung der Anweisungsdaten A2 für das Kraftfahrzeug 2 kommen ein Unterschreiten eines Mindestabstands des Kraftfahrzeugs 2 zum Kraftfahrzeug 7' sowie ein Vorrang des Fußgängers 7' beim Überqueren der Straße auf dem Zebrastreifen 12 in Betracht. Die Anweisungsdaten können daher mit einem Bremsmanöver und einer reduzierten Geschwindigkeit von der Servervorrichtung 1 nachjustiert werden, um eine Kollision des Kraftfahrzeugs 2 mit dem Kraftfahrzeug 7' und dem Fußgänger 7' zu vermeiden. Die aktualisierten Anweisungsdaten A2N werden im Anschluss an die Steuerschaltung 10 des Kraftfahrzeugs 2 gesendet, das die aktualisierten Anweisungsdaten A2N als aktualisierte Handlungsanweisung umsetzt. Im Verkehrsgeschehen wird der besagte Prozess wiederholt durchgeführt.

Die Lösung umfasst daher gemäß einem Aspekt ein Berechnungs- und Bewertungsmodell analog der menschlichen Wahrnehmung: Der Mensch "weiß", d.h. kennt seine Umgebung. Er registriert und bewertet lediglich das Delta (Unterschied oder Abweichung vom Modell oder der Erwartung). Dies bedeutet für einen in der Endausbaustufe autonomen Ansatz: Das Fahrzeug liefert zu einem, aktuellen (also vor wenigen Augenblicken) lokal (also extern vom Backend/ Servervorrichtung) erfassten und/oder berechneten Umfeld, auf zumindest einen Bereich fokussierte und/oder konzentrierte Delta-Informationen an das Backend. Dieses Backend ergänzt das vorberechnete Szenario und überprüft den Einfluss, den diese Veränderung auf das bereits bewertete Szenario hat und schickt entsprechende Maßnahmen an das Fahrzeug zurück. Dieses "vor wenigen Augenblicken extern berechnete Umfeld" ist vergleichbar zum menschlichen Unterbewusstsein (vgl. das Buch des Autors D. Kahneman: "Thinking, fast and slow", ISBN: 9780141033570). Berechnet wird dieses Umfeld als "Model in the Middle" (Modell in der Mitte) oder auch "Digital Twin" (digitaler Zwilling) und berücksichtigt neben den beschriebenen Umfelddaten, die unmittelbar ans Backend (ohne "Umweg" Fahrzeug) geliefert werden - wenn technisch realisierbar - auch Sensordaten von Fahrzeugen, die wenigen Augenblicke vor dem eigentlichen Objekt an derselben Stelle vorbeigekommen sind und somit die Möglichkeit gibt, Dinge nicht in Echtzeit berechnen und bewerten zu müssen.

Heutige Sensoren im Fahrzeug können schon ausreichend zur Umsetzung der Idee sein, sodass hier auf Sensorschaltungen aus dem Stand der Technik zurückgegriffen werden kann.

Insgesamt ergibt sich eine Vermeidung von Komplexität in Onboard-Hardware / Onboard-Software eines Kraftfahrzeugs, geringere Verbräuche (z.B. durch weniger Energiebedarf, geringeres Fahrzeug-Leergewicht), geringere Datenmengen (deutlich reduzierter Bedarf an Übertragungskapazität zum Backend - insbesondere in Bezug auf Latenz und Bandbreite), geringere Kosten im Schadensfall (z.B. Schadensklasse, Gewährleistung), höhere Attraktivität der "Jungen Gebrauchten" (d.h. Steigerung Wiederverkaufsattraktivität).

Eine Rechnerumgebung ( Servervorrichtung), das sog. Backend, hält somit für "das Unterbewusstsein" eine nahezu echtzeit-aktuelle Umgebungsinformationen vor (bevorzugt mit einem Alter von höchsten 10 Minuten). Diese wird durch zu definierende Trigger z.B. nach dem Push und/oder Pull-Prinzip aus im Vorfeld definierten Quellen aktuell gehalten. Abgestuft nach der erwarteten Änderungshäufigkeit: Straßenzüge / Gebäude / Signalanlagen und dagegen Wetterdaten vs. Verkehrsteilnehmer zu Fuß und dagegen Verkehrsteilnehmer Rad und dagegen Verkehrsteilnehmer (Fahrzeuge). Optional fokussiert auf wiederholt abgefahrene Routen (was durch Abonnementdaten signalisiert werden kann). Das Fahrzeug sendet Position und bevorzugt vorbestimmte weitere Zustandsdaten, sowie als relevant klassifizierte Delta-Daten (z.B. Verkehrsteilnehmer, wie z.B. ein Fahrzeug) an das Backend. Das Backend analysiert diese Änderungen gegenüber dem bereits vorliegenden "Unterbewusstsein" und bewertet vorzuschlagende Maßnahmen, optional auch nur Justierung bereits abgesetzter und "vorgeladener" Maßnahmen vor der eigentlichen Ausführung durch das Fahrzeug (weitere Reduktion der in Echtzeit zu übertragenen Daten).

Die Erfindung betrifft ein Verfahren zum Koordinieren von Verkehrsteilnehmern durch eine Servervorrichtung, welche Anweisungsdaten mittels eines Zentralmodells ermittelt und als Handlungsanweisung an eine Steuerschaltung der jeweiligen Verkehrsteilnehmer sendet. Das Zentralmodell ist ein virtuelles Abbild einer realen Umgebung und wird von der Servervorrichtung aus Umgebungsdaten und Delta-Daten der Verkehrsteilnehmer erstellt und/oder aktualisiert. Bei Erreichen des Verkehrsteilnehmers an der realen Umgebung erstellt dieser mittels bordeigener Sensordaten ein Lokalmodell und ermittelt Delta-Daten zu dem Zentralmodell. Die Delta-Daten werden von der Steuerschaltung des jeweiligen Verkehrsteilnehmers an die Servervorrichtung gesendet, welche mittels der Delta-Daten und dem Zentralmodell ein aktualisiertes Zentralmodell erstellt. Die Servervorrichtung ermittelt und sendet daraufhin aktualisierte Anweisungsdaten als Nachjustierung der Anweisungsdaten an die Verkehrsteilnehmer.

Insgesamt zeigen die Beispiele, wie für ein zentrales Kartierungssystem eine externe Vorberechnung und Vorbewertung von Umfeldszenarien durch einzelne Kraftfahrzeuge bereitgestellt werden kann.

## Patentansprüche

1. Verfahren zum Koordinieren von Verkehrsteilnehmern (2, 3) durch eine Servervorrichtung (1), wobei die Servervorrichtung (1) wiederholt aus Umgebungsdaten (U) einer Umgebung (11) ein digitales Zentralmodell (4) der Umgebung (11) erstellt und mittels des Zentralmodells (4) für zumindest einen der Verkehrsteilnehmer (2, 3) jeweilige Anweisungsdaten (A2, A3) für eine Handlungsanweisung berechnet, wobei die jeweilige Handlungsanweisung eine von dem jeweiligen Verkehrsteilnehmer (2, 3) in der Umgebung (11) auszuführende Handlung vorgibt, und die Servervorrichtung (1) die jeweilige Handlungsanweisung an den jeweiligen Verkehrsteilnehmer (2, 3) aussendet,
**dadurch gekennzeichnet, dass**
wiederholt die Servervorrichtung (1) zumindest einigen der Verkehrsteilnehmer (2, 3) das Zentralmodell (4) für einen Vergleich mit der Umgebung (11) bereitstellt und von zumindest einem oder einigen der Verkehrsteilnehmer (2, 3) Delta-Daten (D), welche einen durch den oder die Verkehrsteilnehmer (2, 3) erfassten Unterschied zwischen der Umgebung (11) und dem Zentralmodell (4) beschreiben, empfängt und das Zentralmodell (4) auf der Grundlage der Delta-Daten (D) aktualisiert und mittels des aktualisierten Zentralmodells (6) überprüft, ob die Anweisungsdaten (A2, A3) gemäß einem vorbestimmten Korrekturkriterium korrekturbedürftig sind, wobei
durch das Zentralmodell (4) mehrere Verkehrsobjekte (7, 7') beschrieben werden und jedes Verkehrsobjekt (7, 7') einer aus mehreren vorbestimmten Objektkategorien zugeordnet ist und für jede Objektkategorie festgelegt ist:
a) eine Änderungshäufigkeit, die angibt, mit welcher Höchstrate Delta-Daten (D) für jedes Verkehrsobjekts (7, 7') dieser Objektkategorie höchstens erzeugt werden sollen, und/oder
b) eine Priorität, durch welche eine Reihenfolge in Bezug auf das Ermitteln des Unterschieds festgelegt wird, um eine zur Verfügung stehende Rechenzeit zu fokussieren, und
wobei bei Erkennen von korrekturbedürftigen Anweisungsdaten (A2) diese durch Anpassen der Handlungsanweisung an das aktualisierte Zentralmodell (6) aktualisiert werden und die aktualisierten Anweisungsdaten (A2N) an den jeweiligen Verkehrsteilnehmer (2, 3), für welchen die jeweilige Handlungsanweisung bestimmt ist, ausgesendet werden.

2. Verfahren nach Anspruch 1, wobei die Anpassung der Handlungsanweisung von der Servervorrichtung (1) in Abhängigkeit von einer Bewegungsgeschwindigkeit des jeweiligen Verkehrsteilnehmers (2, 3) und/oder einer Verkehrssituation, in welcher sich der jeweilige Verkehrsteilnehmer (2, 3) befindet, priorisiert wird.

3. Verfahren nach einem der vorhergehenden Ansprüche, wobei die Servervorrichtung (1) das Zentralmodell (4) zusätzlich auf der Grundlage von Sensordaten von zumindest einem der Verkehrsteilenehmer (2, 3) erzeugt und/oder aktualisiert.

4. Verfahren nach Anspruch 3, wobei die Sensordaten zumindest einige der folgenden umfasst: Geopositionsdaten eines aktuellen Aufenthaltsorts der Verkehrsteilnehmer (2, 3), Geschwindigkeitsdaten einer Bewegungsgeschwindigkeit der Verkehrsteilnehmer (2, 3), Beobachtungsdaten zu der Umgebung (11) aus der Sicht der Verkehrsteilnehmer (2, 3).

5. Verfahren nach einem der vorhergehenden Ansprüche, wobei eine Geoposition und/oder eine Relativposition eines sich in der Umgebung (11) bewegenden Verkehrsobjekts (7, 7') im Zentralmodell (4) von der Servervorrichtung (1) extrapoliert wird.

6. Verfahren nach einem der vorhergehenden Ansprüche, wobei die Servervorrichtung (1) die Anweisungsdaten (A2, A3) für Handlungsanweisungen mit einem zukünftigen Ausführungszeitpunkt zeitlich im Voraus aussendet, sodass sich zwischen einem Aussendezeitpunkt der Anweisungsdaten (A2, A3) und dem Ausführungszeitpunkt ein Latenzwert ergibt, wobei durch Auswählen der Aussendezeitpunkt der Latzenzwert von einer Geschwindigkeit des Verkehrsteilnehmers (2, 3) und/oder einer Verkehrssituation in einem Bereich vor dem Verkehrsteilnehmer (2, 3) abhängig eingestellt wird.

7. Verfahren nach Anspruch 6, wobei der Verkehrsteilnehmer (2, 3) die jeweilige Handlungsanweisung in einer Simulation um einen Latenzwert zeitlich voraus versetzt durchführt und mittels des Zentralmodells (4) eine sich daraus ergebende zukünftige Verkehrssituation schätzt.

8. Verfahren nach einem der vorhergehenden Ansprüche, wobei der jeweilige Verkehrsteilnehmer (2, 3) zum Vergleichen der Umgebung (11) mit dem Zentralmodell (4) folgende Schritte durchführt: mittels Sensordaten einer Sensorschaltung (13), die der Verkehrsteilnehmer (2, 3) mit sich führt, wird ein digitales Lokalmodell (5) der Umgebung (11) erstellt und ein Unterschied zwischen dem Lokalmodell (5) und dem Zentralmodell (4) ermittelt und durch die Delta-Daten (D) als Modelldifferenz beschrieben, wobei der Verkehrsteilnehmer (2, 3) die Delta-Daten (D) an die Servervorrichtung (1) sendet.

9. Servervorrichtung (1), wobei die Servervorrichtung (1) dazu eingerichtet ist, ein Verfahren nach einem der Ansprüche 1 bis 6 durchzuführen.

10. Steuerschaltung (9, 10) für einen Verkehrsteilnehmer (2, 3), wobei die Steuerschaltung (9, 10) dazu eingerichtet ist, aus einer Servervorrichtung (1) nach Anspruch 9 Modelldaten eines Zentralmodells (4) einer Umgebung (11) des Verkehrsteilnehmers (2, 3) zu empfangen und Delta-Daten (D), welche einen durch den Verkehrsteilnehmer (2, 3) erfassten Unterschied zwischen der Umgebung (11) und dem Zentralmodell (4) beschreibt, zu ermitteln und an die Servervorrichtung (1) auszusenden, und aus der Servervorrichtung (1) Anweisungsdaten (A2, A3) mit Handlungsanweisungen für eine Handlung in der Umgebung (11) zu empfangen und die Handlungsanweisung danach in Abhängigkeit von aktualisierten Anweisungsdaten (A2N) aus der Servervorrichtung (1) anzupassen.

## Claims

1. Method for coordinating road users (2, 3) using a server device (1), wherein the server device (1) repeatedly creates, from environment data (U) of an environment (11), a digital central model (4) of the environment (11) and computes respective instruction data (A2, A3) for an action instruction by means of the central model (4) for at least one of the road users (2, 3), wherein the respective action instruction specifies an action to be performed by the respective road user (2, 3) in the environment (11), and the server device (1) transmits the respective action instruction to the respective road user (2, 3),
**characterised in that**
the server device (1) repeatedly provides at least some of the road users (2, 3) with the central model (4) for comparison with the environment (11) and receives, from at least one or some of the road users (2, 3), delta data (D) describing a difference detected by the road user(s) (2, 3) between the environment (11) and the central model (4) and updates the central model (4) on the basis of the delta data (D) and checks, using the updated central model (6), whether the instruction data (A2, A3) are in need of correction according to a predetermined correction criterion, wherein
several road objects (7, 7') are described by the central model (4) and each road object (7, 7') is assigned to one of several predetermined object categories and the following are defined for each object category:
a) a frequency of change indicating the maximum rate at which delta data (D) should be generated for each road object (7, 7') in this object category, and/or
b) a priority which defines an order with respect to the determination of the difference in order to focus an available computing time, and
wherein, when instruction data (A2) in need of correction are detected, they are updated by adapting the action instruction to the updated central model (6) and the updated instruction data (A2N) are transmitted to the respective road user (2, 3) for whom the respective action instruction is intended.

2. Method according to claim 1, wherein the adaptation of the action instruction is prioritised by the server device (1) depending on a movement speed of the respective road user (2, 3) and/or a traffic situation in which the respective road user (2, 3) is present.

3. Method according to any of the preceding claims, wherein the server device (1) additionally generates and/or updates the central model (4) on the basis of sensor data from at least one of the road users (2, 3).

4. Method according to claim 3, wherein the sensor data comprise at least some of the following: geoposition data of a current location of the road users (2, 3), speed data of a movement speed of the road users (2, 3), observation data on the environment (11) as seen by the road users (2, 3).

5. Method according to any of the preceding claims, wherein a geoposition and/or a relative position of a road object (7, 7') moving in the environment (11) is extrapolated in the central model (4) by the server device (1).

6. Method according to any of the preceding claims, wherein the server device (1) transmits the instruction data (A2, A3) for action instructions with a future execution time ahead of time, such that a latency value is produced between a transmission time of the instruction data (A2, A3) and the execution time, wherein, by selecting the transmission time, the latency value is set depending on a speed of the road user (2, 3) and/or a traffic situation in an area in front of the road user (2, 3).

7. Method according to claim 6, wherein the road user (2, 3) performs the respective action instruction in a simulation offset in advance by a latency value and estimates a resulting future traffic situation using the central model (4).

8. Method according to any of the preceding claims, wherein the respective road user (2, 3) performs the following steps in order to compare the environment (11) with the central model (4): a digital local model (5) of the environment (11) is created by means of sensor data of a sensor circuit (13) which the road user (2, 3) is carrying, and a difference between the local model (5) and the central model (4) is determined and described by the delta data (D) as a model difference, wherein the road user (2, 3) sends the delta data (D) to the server device (1).

9. Server device (1), wherein the server device (1) is configured to perform a method according to any of claims 1 to 6.

10. Control circuit (9, 10) for a road user (2, 3), wherein the control circuit (9, 10) is configured to receive model data of a central model (4) of an environment (11) of the road user (2, 3) from a server device (1) according to claim 9 and to determine delta data (D) describing a difference detected by the road user (2, 3) between the environment (11) and the central model (4) and to transmit said data to the server device (1), and to receive, from the server device (1), instruction data (A2, A3) with action instructions for an action in the environment (11) and to subsequently adapt the action instruction depending on updated instruction data (A2N) from the server device (1).

## Revendications

1. Procédé de coordination d'usagers de la route (2, 3) par un dispositif de serveur (1), dans lequel le dispositif de serveur (1) crée à plusieurs reprises, à partir de données d'environnement (U) d'un environnement (11), un modèle central numérique (4) de l'environnement (11) et calcule des données d'instruction respectives (A2, A3) pour une instruction d'action au moyen du modèle central (4) pour au moins un des usagers de la route (2, 3), dans lequel l'instruction d'action respective prescrit une action à exécuter par l'usager de la route respectif (2, 3) dans l'environnement (11), et le dispositif de serveur (1) émet l'instruction d'action respective à l'usager de la route respectif (2, 3),
**caractérisé en ce que**
le dispositif de serveur (1) fournit à plusieurs reprises à au moins certains des usagers de la route (2, 3) le modèle central (4) pour une comparaison avec l'environnement (11) et reçoit d'au moins un ou de certains des usagers de la route (2, 3) des données delta (D), lesquelles décrivent une différence entre l'environnement (11) et le modèle central (4) détectée par le ou les usagers de la route (2, 3), reçoit et met à jour le modèle central (4) sur la base des données delta (D) et vérifie, au moyen du modèle central mis à jour (6), si les données d'instruction (A2, A3) doivent être corrigées selon un critère de correction prédéterminé, dans lequel
plusieurs objets de circulation (7, 7') sont décrits par le modèle central (4) et chaque objet de circulation (7, 7') est associé à une de plusieurs catégories d'objet prédéterminées et est défini pour chaque catégorie d'objet :
a) une fréquence de modification qui indique à quel taux maximal des données delta (D) doivent être générées au maximum pour chaque objet de circulation (7, 7') de cette catégorie d'objets, et/ou
b) une priorité par laquelle un ordre est défini concernant la détermination de la différence, afin de concentrer un temps de calcul disponible, et
dans lequel, en cas de reconnaissance de données d'instruction (A2) devant être corrigées, celles-ci sont mises à jour en adaptant l'instruction d'action au modèle central mis à jour (6) et les données d'instruction mises à jour (A2N) sont émises à l'usager de la route respectif (2, 3) auquel l'instruction d'action respective est destinée.

2. Procédé selon la revendication 1, dans lequel l'adaptation de l'instruction d'action est hiérarchisée par le dispositif de serveur (1) en fonction d'une vitesse de déplacement de l'usager de la route (2, 3) respectif et/ou d'une situation de circulation dans laquelle se trouve l'usager de la route (2, 3) respectif.

3. Procédé selon l'une quelconque des revendications précédentes, dans lequel le dispositif de serveur (1) génère et/ou met à jour le modèle central (4) en outre sur la base de données de capteur d'au moins un des usagers de la route (2, 3).

4. Procédé selon la revendication 3, dans lequel les données de capteur comprennent au moins certaines des données suivantes : données de géoposition d'un site d'arrêt actuel des usagers de la route (2, 3), données de vitesse d'une vitesse de déplacement des usagers de la route (2, 3), données d'observation sur l'environnement (11) du point de vue des usagers de la route (2, 3).

5. Procédé selon l'une quelconque des revendications précédentes, dans lequel une géoposition et/ou une position relative d'un objet de circulation (7, 7') se déplaçant dans l'environnement (11) est extrapolée dans le modèle central (4) par le dispositif de serveur (1).

6. Procédé selon l'une quelconque des revendications précédentes, dans lequel le dispositif de serveur (1) émet à l'avance dans le temps les données d'instruction (A2, A3) pour des instructions d'action avec un moment d'exécution futur, de sorte qu'une valeur de latence est obtenue entre un moment d'émission des données d'instruction (A2, A3) et le moment d'exécution, dans lequel la valeur de latence est réglée en fonction d'une vitesse de l'usager de la route (2, 3) et/ou d'une situation de circulation dans une zone devant l'usager de la route (2, 3) par sélection du moment d'émission.

7. Procédé selon la revendication 6, dans lequel l'usager de la route (2, 3) exécute l'instruction d'action respective dans une simulation avec un décalage temporel d'une valeur de latence et estime une situation de circulation future qui en résulte au moyen du modèle central (4).

8. Procédé selon l'une quelconque des revendications précédentes, dans lequel l'usager de la route (2, 3) respectif exécute les étapes suivantes pour comparer l'environnement (11) avec le modèle central (4) : au moyen de données de capteur d'un circuit de capteur (13) que l'usager de la route (2, 3) transporte avec lui, un modèle local numérique (5) de l'environnement (11) est créé et une différence entre le modèle local (5) et le modèle central (4) est déterminée et les données delta (D) la décrivent comme différence de modèle, dans lequel l'usager de la route (2, 3) émet les données delta (D) au dispositif de serveur (1).

9. Dispositif de serveur (1), dans lequel le dispositif de serveur (1) est configuré pour mettre en œuvre un procédé selon l'une quelconque des revendications 1 à 6.

10. Circuit de commande (9, 10) pour un usager de la route (2, 3), dans lequel le circuit de commande (9, 10) est configuré pour recevoir d'un dispositif de serveur (1) selon la revendication 9 des données de modèle d'un modèle central (4) d'un environnement (11) de l'usager de la route (2, 3) et déterminer des données delta (D), lesquelles décrivent une différence entre l'environnement (11) et le modèle central (4) détectée par l'usager de la route (2, 3), et les envoyer au dispositif de serveur (1), et recevoir du dispositif de serveur (1) des données d'instruction (A2, A3) avec des instructions d'action pour une action dans l'environnement (11), puis adapter l'instruction d'action en fonction de données d'instruction mises à jour (A2N) du dispositif de serveur (1).
